# EUROPEAN PATENT APPLICATION

(11) **EP 4 734 420 A1**
(43) Date of publication of application: **29.04.2026**
(21) Application number: 23942733.9
(22) Date of filing: 26.06.2023
(51) Int. Cl.: H04L 1/1812

(54) **HYBRID AUTOMATIC REPEAT REQUEST (HARQ) PROCESS CONFIGURATION METHOD, AND TERMINAL**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2023/102529
(87) International publication number: WO 2025/000207

(57) **Abstract**

The present disclosure relates to an HARQ process configuration method and a terminal. The method executed by a terminal comprises: determining that a first-type configured grant (CG) configuration, which meets a first condition, is activated, and an HARQ process identifier associated with a first CG transmission opportunity (TO) indicated by the first-type CG configuration meets a second condition, wherein a CG period indicated by the first-type CG configuration comprises a plurality of TOs; and determining that a first TO is configured to execute an HARQ process. In this way, the terminal can determine whether a first TO among the plurality of TOs indicated by the first-type CG configuration is configured to execute the HARQ process, thereby ensuring normal communication.

## Description

### TECHNICAL FIELD

The present disclosure relates to the field of communication technologies, and in particular relates to a method for configuring a hybrid automatic repeat request (HARQ) process and a terminal.

### BACKGROUND

Extended reality (XR) (virtual reality (VR) and augmented reality (AR)) services require low latency and high throughput. To enhance the XR services, it is proposed to improve the configured grant (CG), allowing multiple CG transmission occasions (CG physical uplink shared channel (PUSCH) occasions, or TOs) to be configured within a CG period.

### SUMMARY

If a CG period indicated by a CG configuration includes multiple TOs, it is impossible to determine whether each of the multiple TOs is configured to execute a HARQ process.

Embodiments of the present disclosure provide a method for configuring a HARQ process and a terminal.

According to a first aspect of embodiments of the present disclosure, a method for configuring an HARQ process is provided, which includes: determining that a first type of CG configuration that meets a first condition is activated, and a HARQ process identifier associated with a first CG transmission occasion (TO) indicated by the first type of CG configuration meets a second condition, where a CG period indicated by the first type of CG configuration includes multiple TOs; and determining that the first TO is configured to execute the HARQ process. Therefore, it may be determined whether the first TO among the multiple TOs indicated by the first type of CG configuration is configured to execute the HARQ process, so as to ensure normal communication.

According to a second aspect of embodiments of the present disclosure, a terminal is provided, which includes a processing module configured to determine that a first type of CG configuration that meets a first condition is activated, and a HARQ process identifier associated with a first TO indicated by the first type of CG configuration meets a second condition, where a CG period indicated by the first type of CG configuration includes multiple TOs. The processing module is further configured to determine that the first TO is configured to execute a HARQ process.

According to a third aspect of embodiments of the present disclosure, a terminal is provided, which includes one or more processors, where the terminal is configured to perform the method for configuring the HARQ process according to the first aspect.

According to a fourth aspect of embodiments of the present disclosure, a communication system is provided, which includes a terminal configured to perform the method for configuring the HARQ process according to the first aspect.

According to a fifth aspect of embodiments of the present disclosure, a storage medium is provided, which has stored therein instructions that, when executed on a communication device, cause the communication device to perform the method for configuring the HARQ process according to the first aspect.

### BRIEF DESCRIPTION OF THE DRAWINGS

In order to more clearly illustrate the technical solutions in the embodiments of the present disclosure, the drawings to be used in the embodiments of the present disclosure will be described below. The following drawings only illustrate some embodiments of the present disclosure, and do not impose specific limitations on the protection scope of the present disclosure.
FIG. 1 is a schematic diagram of the architecture of a communication system provided in an embodiment of the present disclosure.
FIG. 2 is a flowchart of a method for configuring an HARQ process provided in an embodiment of the present disclosure.
FIG. 3A is a flowchart of another method for configuring an HARQ process provided in an embodiment of the present disclosure.
FIG. 3B is a flowchart of yet another method for configuring an HARQ process provided in an embodiment of the present disclosure.
FIG. 3C is a flowchart of still another method for configuring an HARQ process provided in an embodiment of the present disclosure.
FIG. 4 is a block diagram of a terminal provided in an embodiment of the present disclosure.
FIG. 5 is a block diagram of a communication device provided in an embodiment of the present disclosure.
FIG. 6 is a schematic block diagram of a chip provided in an embodiment of the present disclosure.

### DETAILED DESCRIPTION

Embodiments of the present disclosure provide a method for configuring an HARQ process and a terminal.

In a first aspect, embodiments of the present disclosure provide a method for configuring an HARQ process, which includes: determining that a first type of CG configuration that meets a first condition is activated, and a HARQ process identifier associated with a first TO indicated by the first type of CG configuration meets a second condition, where a CG period indicated by the first type of CG configuration includes multiple TOs; and determining that the first TO is configured to execute the HARQ process.

In the above embodiments, it may be determined whether the first TO among the multiple TOs indicated by the first type of CG configuration is configured to execute the HARQ process, so as to ensure normal communication.

In combination with some embodiments of the first aspect, in some embodiments, the first condition includes: no specific parameter being configured in the first type of CG configuration, or a specific parameter being configured in the first type of CG configuration.

In the above embodiments, it may be determined that the first condition is met when no specific parameter is configured in the first type of CG configuration or when a specific parameter is configured in the first type of CG configuration, so as to determine whether each of the multiple TOs is configured to execute the HARQ process.

In combination with some embodiments of the first aspect, in some embodiments, the specific parameter includes at least one of: a HARQ process identifier offset (harq-ProcID-Offset), a second HARQ process identifier offset (harq-ProcID-Offset2), or a HARQ parameter.

In combination with some embodiments of the first aspect, in some embodiments, the second condition includes: the HARQ process identifier associated with the first TO being less than a first value, or the HARQ process identifier associated with the first TO being greater than or equal to a second value and less than a third value.

In combination with some embodiments of the first aspect, in some embodiments, the first value includes at least one of: a HARQ parameter; harq-ProcID-Offset; harq-ProcID-Offset2; the numeric count of HARQ processes (nrofHARQ-Processes); a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In combination with some embodiments of the first aspect, in some embodiments, the second value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In combination with some embodiments of the first aspect, in some embodiments, the third value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In combination with some embodiments of the first aspect, in some embodiments, the HARQ parameter is at least one of: the numeric count of PUSCHs configured within a CG period, the numeric count of PUSCHs configured within a specific period, the numeric count of TOs configured within a CG period, the numeric count of TOs configured within a specific period, the numeric count of PUSCHs configured within a CG period minus 1, the numeric count of PUSCHs configured within a specific period minus 1, the numeric count of TOs configured within a CG period minus 1, the numeric count of TOs configured within a specific period minus 1, the numeric count of valid PUSCHs configured within a CG period, the numeric count of valid PUSCHs configured within a specific period, the numeric count of valid TOs configured within a CG period, the numeric count of valid TOs configured within a specific period, the numeric count of valid PUSCHs configured within a CG period minus 1, the numeric count of valid PUSCHs configured within a specific period minus 1, the numeric count of valid TOs configured within a CG period minus 1, or the numeric count of valid TOs configured within a specific period minus 1.

In combination with some embodiments of the first aspect, in some embodiments, indication information sent by a network device is received, where the indication information indicates the HARQ parameter; and determining the HARQ parameter based on the indication information.

In the above embodiments, the HARQ parameter may be determined based on the indication information to determine at least one of the specific parameter, the first value, the second value, or the third value.

In combination with some embodiments of the first aspect, in some embodiments, receiving the indication information sent by the network device includes: receiving a radio resource control (RRC) signaling sent by the network device, where the RRC signaling includes the indication information.

In the above embodiments, sending the indication information using the existing signaling may reduce signaling overheads.

In combination with some embodiments of the first aspect, in some embodiments, the specific period is a period range indicated by specific uplink control information reported by a terminal, and the specific uplink control information indicates whether a TO within the period range is used.

In combination with some embodiments of the first aspect, in some embodiments, time-frequency resources corresponding to the valid PUSCHs do not conflict with downlink resources, or time-frequency resources corresponding to the valid TOs do not conflict with downlink resources.

In combination with some embodiments of the first aspect, in some embodiments, the downlink resources are at least one of: a first downlink resource indicated by a time division duplexing (TDD) uplink downlink common configuration (tdd-UL-DL-ConfigurationCommon), a second downlink resource indicated by a TDD uplink downlink dedicated configuration (tdd-UL-DL-ConfigurationDedicated), or a third downlink resource occupied by a synchronization signal block (SSB).

In combination with some embodiments of the first aspect, in some embodiments, the HARQ process identifier associated with the first TO indicated by the first type of CG configuration is determined according to a specific calculation formula.

In combination with some embodiments of the first aspect, in some embodiments, the specific calculation formula includes at least one of: a first parameter, or a second parameter.

In combination with some embodiments of the first aspect, in some embodiments, the first parameter is at least one of: a symbol index of the first TO among multiple TOs indicated by the first type of CG configuration, or a symbol index of the first TO among multiple TOs indicated by the first type of CG configuration and a second type of CG configuration.

In combination with some embodiments of the first aspect, in some embodiments, the first TO among the multiple TOs indicated by the first type of CG configuration includes: the first TO among multiple TOs in one CG period indicated by the first type of CG configuration, or the first TO among multiple TOs in multiple CG periods indicated by the first type of CG configuration.

In combination with some embodiments of the first aspect, in some embodiments, the first TO indicated by the first type of CG configuration and the second type of CG configuration includes at least one of: the first TO among multiple TOs in one CG period indicated by the first type of CG configuration and multiple CG periods indicated by the second type of CG configuration, or the first TO among multiple TOs in multiple CG periods indicated by the first type of CG configuration and multiple CG periods indicated by the second type of CG configuration.

In combination with some embodiments of the first aspect, in some embodiments, the second parameter is the numeric count of HARQ process identifiers associated with TOs indicated by the first type of CG configuration.

In combination with some embodiments of the first aspect, in some embodiments, the numeric count of HARQ process identifiers associated with the TOs indicated by the first type of CG configuration includes: the numeric count of HARQ process identifiers associated with TOs in one CG period indicated by the first type of CG configuration, or the numeric count of HARQ process identifiers associated with TOs in multiple CG periods indicated by the first type of CG configuration.

In combination with some embodiments of the first aspect, in some embodiments, the method further includes at least one of: determining that a third parameter is not configured, and determining that the HARQ process is not shared between the first type of CG configuration and a second type of CG configuration; determining that a third parameter is not configured, and determining that the HARQ process is not shared between a TO indicated by the first type of CG configuration and a TO indicated by a second type of CG configuration; determining that a third parameter is not configured, and determining that the HARQ process is not shared between the first type of CG configuration and a second type of CG configuration in the same bandwidth part (BWP); determining that a third parameter is not configured, and determining that the HARQ process is not shared between different first types of CG configurations; or determining that a third parameter is not configured, and determining that the HARQ process is not shared between different first types of CG configurations in the same BWP, where a CG period indicated by the second type of CG configuration includes one TO.

In combination with some embodiments of the first aspect, in some embodiments, determining that the third parameter is not configured includes at least one of: determining that the third parameter is not included in the first type of CG configuration, and determining that the third parameter is not configured; determining that the third parameter is not included in the second type of CG configuration, and determining that the third parameter is not configured; or determining that the third parameter is not configured by a network device, and determining that the third parameter is not configured.

In a second aspect, embodiments of the present disclosure provide a terminal, which includes at least one of a transceiver module or a processing module, where the terminal is configured to execute an optional implementation of the first aspect.

In a third aspect, embodiments of the present disclosure provide a terminal, which includes one or more processors, where the terminal is configured to execute an optional implementation of the first aspect.

In a fourth aspect, embodiments of the present disclosure provide a communication system, which includes a terminal configured to perform the method described in an optional implementation of the first aspect.

In a fifth aspect, embodiments of the present disclosure provide a storage medium, which has stored therein instructions that, when executed on a communication device, cause the communication device to perform the method described in an optional implementation of the first aspect.

In a sixth aspect, embodiments of the present disclosure provide a program product that, when executed by a communication device, causes the communication device to perform the method described in an optional implementation of the first aspect.

In a seventh aspect, embodiments of the present disclosure provide a computer program that, when run on a computer, causes the computer to perform the method described in an optional implementation of the first aspect.

In an eighth aspect, embodiments of the present disclosure provide a chip or chip system. The chip or chip system includes a processing circuit configured to perform the method described in an optional implementation of the first aspect mentioned above.

It may be understood that the terminal, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure provide a method for configuring an HARQ process and a terminal.

In some embodiments, terms such as a method for configuring an HARQ process, an information processing method, and a communication method may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field," the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level," then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device," then the "first device" and the "second device" may be the same device or different devices, and the types of the "first device" and the "second device" may be the same or different; for another example, if the described object is "information," then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, apparatuses and devices may be interpreted as physical or virtual, and their names are not limited to the names described in the embodiments. In some cases, apparatuses and devices may also be interpreted as an "apparatus," an "equipment," a "device," a "circuit," a "network element," a "node," a "function," a "unit," a "section," a "system," a "network," a "chip," a "chip system," an "entity," a "body," and the like.

In some embodiments, the "network" may be interpreted as devices included in the network, e.g., an access network device, a core network device, or the like.

In some embodiments, the "access network device (AN device)" may also be referred to as a "radio access network device (RAN device)," a "base station (BS)," a "radio base station," or a "fixed station". In some embodiments, the "access network device (AN device)" may also be interpreted as a "node," an "access point," a "transmission point (TP)," a "reception point (RP)," a "transmission/reception point (TRP)," a "panel," an "antenna panel," an "antenna array," a "cell," a "macro cell," a "small cell," a "femto cell," a "pico cell," a "sector," a "cell group," a "serving cell," a "carrier," a "component carrier," a "bandwidth part (BWP)," or the like.

In some embodiments, the terminal or terminal device may also be referred to as a user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or the like.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

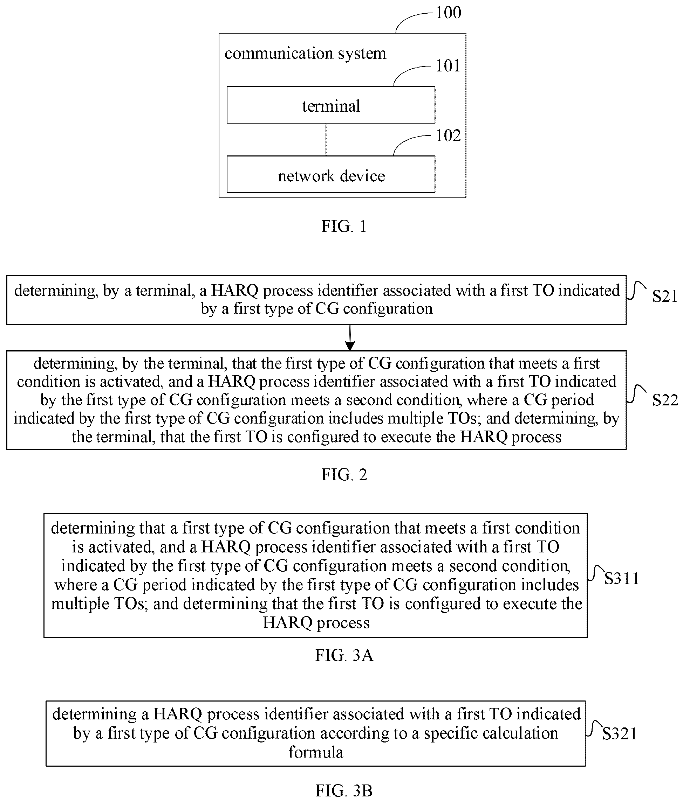

FIG. 1 is a schematic diagram illustrating the architecture of a communication system according to an embodiment of the present disclosure.

As shown in FIG. 1, the communication system includes a terminal 101 and a network device 102.

In some embodiments, for example, the terminal 101 includes, but is not limited to, at least one of mobile phones, wearable devices, Internet of Things devices, cars with communication functions, smart cars, tablets (Pads), computers with wireless transceiver functions virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, or wireless terminals in smart homes.

In some embodiments, the network device 102 may include at least one of an access network device or a core network device.

In some embodiments, the access network device is, for example, a node or device that connects the terminal to a wireless network. The access network device may include, but is not limited to, at least one of an evolved Node B (eNB), a next generation eNB (ng-eNB), a next generation Node B (gNB), a node B (NB), a home node B (HNB), a home evolved node B (HeNB), a radio backhaul device, a radio network controller (RNC), a base station controller (BSC), a base transceiver station (BTS), a base band unit (BBU), or a mobile switching center in a 5G communication system; a base station, an Open radio access network (RAN), or a Cloud RAN in a 6G communication system; base stations in other communication systems, or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN. The procedures and information interactions between these internal interfaces may be implemented by software or programs.

In some embodiments, the access network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU. However, this is not the only possibility.

In some embodiments, the core network device may be a single device, including a first network element, a second network element, and the like, or the core network device may be multiple devices or a group of devices, each including all or some of the first network element, the second network element, and the like. The network elements may be virtual or physical. The core network includes, for example, at least one of an evolved packet core (EPC), a 5G core network (5GCN), or a next generation core (NGC).

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in this embodiment of the present disclosure is also applicable to similar technical problems.

The following embodiments of the present disclosure may be applied to the communication system 100 shown in FIG. 1, or to some entities thereof, but are not limited thereto. The entities shown in FIG. 1 are illustrative. The communication system may include all or some of the entities in FIG. 1, or the communication system may include other entities outside of FIG. 1. The number and form of individual entities are arbitrary. Each entity may be physical or virtual. The connection relationship between the entities is illustrative. The entities may not be connected to each other, or may be connected to each other in any way. The connection may be direct or indirect, and may be wired or wireless.

The embodiments of the present disclosure may be applied to Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other communication methods, nextgeneration systems built upon them, and the like. In addition, multiple systems may also be combined (for example, a combination of 5G and LTE or LTE-A, or the like) for application.

An uplink grant-free transmission and an uplink transmission with a configured grant (PUSCH transmission with a configured grant) support two types of uplink grant-free transmission. For the first type of grant-free transmission, all parameters are configured by a network device via a high-layer signaling (an RRC signaling). For the second type of grant-free transmission, some parameters are configured by a network device via a high-layer signaling, while other scheduling-related parameters are configured by the network device by activating downlink control information (DCI).

In some embodiments, it is possible to configure and activate up to 12 uplink grant-free transmission configurations on one BWP, each configuration being identified by one index.

In some embodiments, an uplink grant-free transmission period (referred to as a CG period) is configured by a high-layer signaling, and supports up to 14×40960 symbols. During the CG period, for the first type of grant-free transmission, time-frequency resources are configured via a high-layer signaling, while for the second type of grant-free transmission, time-frequency resources are configured by activating DCI. These time-frequency resources within the CG period may also be referred to as CG PUSCH occasions (TOs).

In some embodiments, only one TO may be configured within a CG period, or only one TO may be configured within a CG configuration. At the same time, the network device will further configure the number *K* of repeated transmissions via a high-layer signaling. At this time, there will be *K* CG PUSCH occasions with the same configuration within the CG period.

XR (VR, AR) services require low latency and high throughput. To enhance XR services, it is proposed to enhance the CG, that is, to reuse CG PUSCH occasions that are not used by a terminal. For this purpose, multiple TOs may be configured within a CG period, and the terminal may send a dynamic indication signaling to the network device to notify the network device of the "unused" TOs of the terminal.

In some embodiments, the method for determining the HARQ process identifier (ID) is as follows.

Regarding the method for determining the HARQ process identifier for the first type of CG configuration (a CG period indicated by the first type of CG configuration including multiple TOs, also known as multi-PUSCHs CG configuration) in RAN 1, the following content is supported.
Y= 1;
Offset 1 = 0 (for example, remove Offset 1);
Offset 2 = 0 (for example, remove Offset 2).

In some embodiments, for determining the HARQ process identifier associated with a TO (or PUSCH) in a multi-PUSCHs CG configuration, it is assumed that there is one transport block (TB) per TO (or PUSCH):
X is outside the floor operation;
X= the numeric count of TOs (or PUSCHs) configured within the CG period.

In some embodiments, the HARQ process identifier of the remaining configured/valid CG PUSCHs in the time period is determined by incrementing the HARQ process identifier of the preceding PUSCH in the time period by one with module operation with nrofHARQ-Processes or module operation with (nrofHARQ-Processes + harq-ProcID-Offset2), whichever is applicable.

In some embodiments, from the RAN1 perspective, for determination of HARQ process IDs associated with TOs (or PUSCHs) in a multi-PUSCHs CG configuration, it is assumed that there is one TB per TO (or PUSCH).

The HARQ process ID for the first configured (or PUSCH) in a time period is determined based on the legacy CG procedure when a CG retransmission timer (cg-RetransmissionTimer) is not configured, and applying the following formula, whichever is applicable:
HARQ Process ID = [X*floor( (CURRENT symbol ) / periodicity)] modulo nrofHARQ-Processes;
HARQ Process ID = [X*floor((CURRENT_symbol ) / periodicity)] modulo nrofHARQ-Processes + harq-ProcID-Offset2,
where X = the numeric count of TOs (or PUSCHs) configured within the CG period,
where floor is the floor operation, modulo is the modulo operation, and periodicity is a period in a CG configuration.

In some embodiments, the HARQ process ID of the remaining configured and valid TOs (or PUSCHs) in the time period is determined by incrementing the HARQ process ID of the preceding TO (or PUSCH) in the period by one with module operation with nrofHARQ-Processes or module operation with (nrofHARQ-Processes + harq-ProcID-Offset2), whichever is applicable.

It should be noted that a configured TO (or PUSCH) is invalid if the TO (or PUSCH) is dropped due to collision with downlink (DL) symbol(s) indicated by tdd-UL-DL-ConfigurationCommon or tdd-UL-DL-ConfigurationDedicated or a synchronization/physical broadcast channel block (SSB).

In some embodiments, in order to assign corresponding HARQ process IDs to multiple TOs within a CG period, *X* (the numeric count of TOs within a CG period) is introduced into the calculation of the HARQ process IDs. The enhanced formula mentioned above is used to calculate the HARQ process ID corresponding to the first TO within the CG period, while the HARQ process IDs corresponding to the remaining TOs are determined by incrementing the HARQ process ID corresponding to the first TO by 1.

In some embodiments, the HARQ process ID (also known as HP ID) is subject to the following restrictions.
1. CURRENT_symbol refers to the symbol index of the first transmission occasion of a bundle of configured uplink grant.
2. AHARQ process is configured for a configured uplink grant where neither harq-ProcID-Offset nor harq-ProcID-Offset2 is configured, if the configured uplink grant is activated and the associated HARQ process ID is less than nrofHARQ-Processes. A HARQ process is configured for a configured uplink grant where harq-ProcID-Offset2 is configured, if the configured uplink grant is activated and the associated HARQ process ID is greater than or equal to harq-ProcID-Offset2 and less than the sum of harq-ProcID-Offset2 and nrofHARQ-Processes for the configured grant configuration.
3. If cg-RetransmissionTimer is not configured, a HARQ process is not shared between different configured grant configurations in the same BWP.

Among them, 1 mainly defines the meaning of the parameter CURRENT_symbol, which is the symbol index of the first transmission occasion in a set of CG configurations.

2 mainly defines the limits on the size of the HARQ process ID when the HARQ process is valid.

3 mainly determine the sharing of the HARQ process between different CG configurations.

In some embodiments, considering an accumulation mechanism, the HARQ process ID is limited.

The HARQ process may only be configured when the HARQ process ID is less than nrofHARQ-Processes or less than the sum of harq-ProcID-Offset2 and nrofHARQ-Processes. Due to the accumulation mechanism, the actual calculated value of the HARQ process ID will be amplified according to the numeric count of TOs within a CG period. If no optimization is performed, the HARQ process cannot be configured on some TOs. There are two optimization paths. First, the ordinary nrofHARQ-Processes and the nrofHARQ-Processes in the multi-PUSCHs CG configuration (the first type of CG configuration) are configured independently. In this case, a larger value may be configured for the multi-PUSCHs CG, and the calculation of the HARQ processes for the ordinary nrofHARQ-Processes and the nrofHARQ-Processes in the multi-PUSCHs CG will not be affected. Second, the restrictions are modified by introducing *X* (the numeric count of TOs in a CG period) to supplement the restrictions. This ensures that the limitation effect on the HARQ process ID of the multi-PUSCHs CG is the same as before.

It may be understood that if the CG period indicated by the CG configuration includes multiple TOs, it is impossible to determine whether each of the multiple TOs is configured to execute the HARQ process.

In the embodiments of the disclosure, it is determined that a first type of CG configuration that meets a first condition is activated, and a HARQ process identifier associated with a first TO indicated by the first type of CG configuration meets a second condition, where a CG period indicated by the first type of CG configuration includes multiple TOs; and it is determined that the first TO is configured to execute the HARQ process. Therefore, it may be determined whether the first TO among the multiple TOs indicated by the first type of CG configuration is configured to execute the HARQ process, so as to ensure normal communication.

FIG. 2 is an interactive schematic diagram illustrating a method for configuring an HARQ process according to an embodiment of the present disclosure. As shown in FIG. 2, embodiments of the present di sclosure relate to a method for configuring an HARQ process, which includes the following steps.

At step S21, a terminal determines a HARQ process identifier associated with a first TO indicated by a first type of CG configuration.

In an embodiment of the present disclosure, the terminal may determine the HARQ process identifier associated with the first TO indicated by the first type of CG configuration.

It may be understood that the terminal may determine the HARQ process identifier associated with the first TO indicated by the first type of CG configuration using methods in the related art, or the terminal may determine the HARQ process identifier associated with the first TO among multiple TOs indicated by the first type of CG configuration using methods in the related art. The HARQ process identifiers associated with subsequent TOs are determined by incrementing the HARQ process identifier associated with the first TO by 1.

Certainly, the terminal may also determine the HARQ process identifier associated with the first TO indicated by the first type of CG configuration using other methods, which is not specifically limited in the embodiments of the present disclosure.

In some embodiments, the CG period indicated by the first type of CG configuration includes multiple TOs.

In some embodiments, the first TO may be any one of the multiple TOs indicated by the first type of CG configuration.

In some embodiments, the terminal determines the HARQ process identifier associated with the first TO indicated by the first type of CG configuration according to a specific calculation formula.

In an embodiment of the present disclosure, the terminal may determine the HARQ process identifier associated with the first TO indicated by the first type of CG configuration according to a specific calculation formula.

In some embodiments, the specific calculation formula includes at least one of: a first parameter, or a second parameter.

In an embodiment of the present disclosure, the specific calculation formula includes the first parameter.

For example, the first parameter may be CURRENT_symbol, or the first parameter may also be CURRENT_symbol_r18.

In an embodiment of the present disclosure, the specific calculation formula includes the second parameter.

For example, the first parameter may be nrofHARQ-Processes, or the first parameter may also be nrofHARQ-Processes_r18.

In some embodiments, the first parameter is at least one of: a symbol index of the first TO among multiple TOs indicated by the first type of CG configuration, or a symbol index of the first TO among multiple TOs indicated by the first type of CG configuration and a second type of CG configuration.

In an embodiment of the present disclosure, the first parameter may be the symbol index of the first TO among the multiple TOs indicated by the first type of CG configuration.

In an embodiment of the present disclosure, if the terminal is configured with both the first type of CG configuration and the second type of CG configuration, the first parameter may be the symbol index of the first TO among the multiple TOs indicated by the first type of CG configuration and the second type of CG configuration.

In some embodiments, the second type of CG configuration differs from the first type of CG configuration.

In some embodiments, the second type of CG configuration may be a CG configuration in the related art, for example, the CG period indicated by the second type of CG configuration includes only one TO.

For example, the first type of CG configuration indicates two TOs, and the second type of CG configuration indicates one TO. The first TO among the multiple TOs indicated by the first type of CG configuration and the second type of CG configuration may be determined according to the order of the TOs, and then the symbol index of the first TO may be determined.

In some embodiments, the first TO among the multiple TOs indicated by the first type of CG configuration includes: the first TO among multiple TOs in one CG period indicated by the first type of CG configuration, or the first TO among multiple TOs in multiple CG periods indicated by the first type of CG configuration.

In an embodiment of the present disclosure, in the case where the first type of CG configuration indicates one CG period, the first TO indicated by the first type of CG configuration may be the first TO among multiple TOs in one CG period indicated by the first type of CG configuration.

In an embodiment of the present disclosure, in the case where the first type of CG configuration indicates multiple CG periods, the first TO indicated by the first type of CG configuration may be the first TO among multiple TOs in multiple CG periods indicated by the first type of CG configuration.

In some embodiments, the first TO among the multiple TOs indicated by the first type of CG configuration and the second type of CG configuration includes: the first TO among multiple TOs in one CG period indicated by the first type of CG configuration and multiple CG periods indicated by the second type of CG configuration, or the first TO among multiple TOs in multiple CG periods indicated by the first type of CG configuration and multiple CG periods indicated by the second type of CG configuration.

In an embodiment of the present disclosure, in the case where the first type of CG configuration indicates one CG period and the second type of CG configuration indicates multiple CG periods, the first TO among the multiple TOs indicated by the first type of CG configuration and the second type of CG configuration may be the first TO among the multiple TOs in the CG period indicated by the first type of CG configuration and the multiple CG periods indicated by the second type of CG configuration.

In an embodiment of the present disclosure, in the case where the first type of CG configuration indicates multiple CG periods and the second type of CG configuration indicates multiple CG periods, the first TO among the multiple TOs indicated by the first type of CG configuration and the second type of CG configuration may be the first TO among the multiple TOs in the multiple CG periods indicated by the first type of CG configuration and the multiple CG periods indicated by the second type of CG configuration.

In some embodiments, the second parameter is the numeric count of HARQ process identifiers associated with TOs indicated by the first type of CG configuration.

In an embodiment of the present disclosure, the specific calculation formula includes the second parameter, and the second parameter may be the numeric count of HARQ process identifiers associated with TOs indicated by the first type of CG configuration.

In some embodiments, the numeric count of HARQ process identifiers associated with the TOs indicated by the first type of CG configuration includes at least one of: the numeric count of HARQ process identifiers associated with TOs in one CG period indicated by the first type of CG configuration, or the numeric count of HARQ process identifiers associated with TOs in multiple CG periods indicated by the first type of CG configuration.

In an embodiment of the present disclosure, the second parameter is the numeric count of HARQ process identifiers associated with the TOs indicated by the first type of CG configuration, which may be the numeric count of HARQ process identifiers associated with TOs in one CG period indicated by the first type of CG configuration.

In an embodiment of the present disclosure, the second parameter is the numeric count of HARQ process identifiers associated with the TOs indicated by the first type of CG configuration, which may be the numeric count of HARQ process identifiers associated with TOs in multiple CG periods indicated by the first type of CG configuration.

At step S22, the terminal determines that the first type of CG configuration that meets a first condition is activated, and a HARQ process identifier associated with a first TO indicated by the first type of CG configuration meets a second condition, where a CG period indicated by the first type of CG configuration includes multiple TOs; and determines that the first TO is configured to execute the HARQ process.

In an embodiment of the present disclosure, the terminal may determine that the first type of CG configuration that meets the first condition is activated.

For example, in the case where the terminal receives all the parameters for a grant-free transmission of the first type of CG configuration configured by a network device via a high-layer signaling (an RRC signaling), the terminal may determine that the first type of CG configuration is activated.

For example, in the case where the terminal receives some parameters for a grant-free transmission of the first type of CG configuration configured by the network device via a high-layer signaling, and receives the other parameters for the grant-free transmission of the first type of CG configuration configured by the network device by activating DCI, the terminal may determine that the first type of CG configuration is activated.

In some embodiments, the first condition includes: no specific parameter being configured in the first type of CG configuration, or a specific parameter being configured in the first type of CG configuration.

In an embodiment of the present disclosure, the first condition includes no specific parameter being configured in the first type of CG configuration.

In an embodiment of the present disclosure, the first condition includes a specific parameter being configured in the first type of CG configuration.

In some embodiments, the specific parameter includes at least one of: a HARQ process identifier offset (harq-ProcID-Offset), a second HARQ process identifier offset (harq-ProcID-Offset2), or a HARQ parameter.

In an embodiment of the present disclosure, the specific parameter may include at least one of harq-ProcID-Offset, harq-ProcID-Offset2, or a HARQ parameter.

In some embodiments, the terminal may determine the HARQ parameter based on a protocol predefinition, or the terminal may determine the HARQ parameter based on an instruction from the network device, or the terminal may determine the HARQ parameter based on an implementation, which is not specifically limited in the embodiments of the present disclosure.

In some embodiments, the HARQ parameter may be *X* (the numeric count of TOs within a CG period) introduced into the calculation of the HARQ process ID in order to assign corresponding HARQ process IDs to multiple TOs within the CG period.

In an embodiment of the present disclosure, the terminal may determine that the first type of CG configuration that meets the first condition is activated, and that the HARQ process identifier associated with the first TO indicated by the first type of CG configuration meets the second condition.

In some embodiments, the second condition includes: the HARQ process identifier associated with the first TO being less than a first value, or the HARQ process identifier associated with the first TO being greater than or equal to a second value and less than a third value.

In an embodiment of the present disclosure, the second condition includes the HARQ process identifier associated with the first TO being less than the first value.

In an embodiment of the present disclosure, the second condition includes the HARQ process identifier associated with the first TO being greater than or equal to the second value and less than the third value.

In some embodiments, determining, by the terminal, that the first type of CG configuration that meets the first condition is activated, and the HARQ process identifier associated with the first TO indicated by the first type of CG configuration meets the second condition includes: determining that no specific parameter is configured in the first type of CG configuration, and the HARQ process identifier associated with the first TO indicated by the first type of CG configuration is less than a first value; or determining that no specific parameter is configured in the first type of CG configuration, and the HARQ process identifier associated with the first TO indicated by the first type of CG configuration is greater than or equal to a second value and less than a third value; or determining that a specific parameter is configured in the first type of CG configuration, and the HARQ process identifier associated with the first TO indicated by the first type of CG configuration is greater than or equal to a second value and less than a third value.

In an embodiment of the present disclosure, determining, by the terminal, that the first type of CG configuration that meets the first condition is activated, and the HARQ process identifier associated with the first TO indicated by the first type of CG configuration meets the second condition may be: determining that no specific parameter is configured in the first type of CG configuration, and the HARQ process identifier associated with the first TO indicated by the first type of CG configuration is less than the first value.

In an embodiment of the present disclosure, determining, by the terminal, that the first type of CG configuration that meets the first condition is activated, and the HARQ process identifier associated with the first TO indicated by the first type of CG configuration meets the second condition may be: determining that no specific parameter is configured in the first type of CG configuration, and the HARQ process identifier associated with the first TO indicated by the first type of CG configuration is greater than or equal to the second value and less than the third value.

In an embodiment of the present disclosure, determining, by the terminal, that the first type of CG configuration that meets the first condition is activated, and the HARQ process identifier associated with the first TO indicated by the first type of CG configuration meets the second condition may be: determining that the specific parameter is configured in the first type of CG configuration, and the HARQ process identifier associated with the first TO indicated by the first type of CG configuration is greater than or equal to the second value and less than the third value.

In some embodiments, the first value includes at least one of: a HARQ parameter; harq-ProcID-Offset; harq-ProcID-Offset2; the numeric count of HARQ processes (nrofHARQ-Processes); a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In some embodiments, the second value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In some embodiments, the third value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In some embodiments, the HARQ parameter is at least one of: the numeric count of PUSCHs configured within a CG period, the numeric count of PUSCHs configured within a specific period, the numeric count of TOs configured within a CG period, the numeric count of TOs configured within a specific period, the numeric count of PUSCHs configured within a CG period minus 1, the numeric count of PUSCHs configured within a specific period minus 1, the numeric count of TOs configured within a CG period minus 1, the numeric count of TOs configured within a specific period minus 1, the numeric count of valid PUSCHs configured within a CG period, the numeric count of valid PUSCHs configured within a specific period, the numeric count of valid TOs configured within a CG period, the numeric count of valid TOs configured within a specific period, the numeric count of valid PUSCHs configured within a CG period minus 1, the numeric count of valid PUSCHs configured within a specific period minus 1, the numeric count of valid TOs configured within a CG period minus 1, or the numeric count of valid TOs configured within a specific period minus 1.

In some embodiments, the terminal receives indication information sent by the network device, where the indication information indicates the HARQ parameter; and determines the HARQ parameter based on the indication information.

In an embodiment of the present disclosure, the terminal may receive indication information sent by the network device, and determine the HARQ parameter based on the indication information.

In some embodiments, receiving, by the terminal, the indication information sent by the network device includes: receiving an RRC signaling sent by the network device, where the RRC signaling includes the indication information.

In an embodiment of the present disclosure, receiving, by the terminal, the indication information sent by the network device may be receiving an RRC signaling sent by the network device, where the RRC signaling includes the indication information.

In some embodiments, the specific period is a period range indicated by specific uplink control information reported by a terminal, and the specific uplink control information indicates whether a TO within the period range is used.

In an embodiment of the present disclosure, the specific period is a period range indicated by specific uplink control information reported by the terminal, where the specific uplink control information indicates whether a TO within the period range is used.

In some embodiments, the specific uplink control information may be unused transmission occasion-uplink control information (UTO-UCI).

In some embodiments, time-frequency resources corresponding to the valid PUSCHs do not conflict with downlink resources, or time-frequency resources corresponding to the valid TOs do not conflict with downlink resources.

In an embodiment of the present disclosure, time-frequency resources corresponding to the valid PUSCHs do not conflict with downlink resources.

In an embodiment of the present disclosure, time-frequency resources corresponding to the valid TOs do not conflict with downlink resources.

In some embodiments, the downlink resources are at least one of: a first downlink resource indicated by a time division duplexing (TDD) uplink downlink common configuration (tdd-UL-DL-ConfigurationCommon), a second downlink resource indicated by a TDD uplink downlink dedicated configuration (tdd-UL-DL-ConfigurationDedicated), or a third downlink resource occupied by a synchronization signal block (SSB).

In an embodiment of the present disclosure, the downlink resources are the first downlink resource indicated by tdd-UL-DL-ConfigurationCommon.

In an embodiment of the present disclosure, the downlink resources are the second downlink resource indicated by tdd-UL-DL-ConfigurationDedicated.

In an embodiment of the present disclosure, the downlink resources are the third downlink resource occupied by the SSB.

In some embodiments, the terms such as "uplink," "up link," and "physical uplink" may be used interchangeably, and the terms such as "downlink," "down link," and "physical downlink" may be used interchangeably.

In some embodiments, the terms such as "synchronization signal (SS)," "SSB," "reference signal (RS)," "pilot," and "pilot signal" may be used interchangeably.

In an embodiment of the present disclosure, in one implementation, if the first type of CG configuration (multi-PUSCHs CG configuration) not configured with harq-ProcID-Offset or harq-ProcID-Offset2 is activated, and the HARQ process ID associated with the first TO indicated by the first type of CG configuration is less than the sum of the HARQ parameter (HARQ_X) and nrofHARQ-Processes, then the terminal may determine that the HARQ process is configured for the first TO indicated by the first type of CG configuration.

In an embodiment of the present disclosure, in one implementation, if the first type of CG configuration (multi-PUSCHs CG configuration) not configured with harq-ProcID-Offset or harq-ProcID-Offset2 is activated, and the HARQ process ID associated with the first TO indicated by the first type of CG configuration is not less than the HARQ parameter (HARQ_X) and is less than the sum of the HARQ parameter (HARQ_X) and nrofHARQ-Processes, then the terminal may determine that the HARQ process is configured for the first TO indicated by the first type of CG configuration.

In an embodiment of the present disclosure, in one implementation, if the first type of CG configuration (multi-PUSCHs CG configuration) not configured with harq-ProcID-Offset2 is activated, and the HARQ process ID associated with the first TO indicated by the first type of CG configuration is not less than harq-ProcID-Offset2 and is less than the sum of the HARQ parameter (HARQ_X), harq-ProcID-Offset2 and nrofHARQ-Processes, then the terminal may determine that the HARQ process is configured for the first TO indicated by the first type of CG configuration.

In an embodiment of the present disclosure, in one implementation, if the first type of CG configuration (multi-PUSCHs CG configuration) not configured with harq-ProcID-Offset2 is activated, and the HARQ process ID associated with the first TO indicated by the first type of CG configuration is not less than the sum of the HARQ parameter (HARQ_X) and harq-ProcID-Offset2, and is less than the sum of the HARQ parameter (HARQ_X), harq-ProcID-Offset2, and nrofHARQ-Processes, then the terminal may determine that the HARQ process is configured for the first TO indicated by the first type of CG configuration.

In some embodiments, the terminal determines that a third parameter is not configured, and determines an execution of at least one of: the HARQ process being not shared between the first type of CG configuration and a second type of CG configuration; the HARQ process being not shared between a TO indicated by the first type of CG configuration and a TO indicated by a second type of CG configuration; the HARQ process being not shared between the first type of CG configuration and a second type of CG configuration in the same BWP; the HARQ process being not shared between different first types of CG configurations; or the HARQ process being not shared between different first types of CG configurations in the same BWP, where a CG period indicated by the second type of CG configuration includes one TO.

In some embodiments, the terminal may determine whether to configure the third parameter.

In some embodiments, the third parameter may be a CG retransmission timer (cg-Retransmission Timer).

Certainly, the third parameter may be other parameters, which is not specifically limited in the embodiments of the present disclosure.

In one possible implementation, the terminal may determine whether the third parameter is configured by determining whether the first type of CG configuration includes the third parameter.

In one possible implementation, the terminal may determine whether the third parameter is configured by determining whether the second type of CG configuration includes the third parameter.

In one possible implementation, the terminal may determine whether the third parameter is configured by determining whether the network device is configured with the third parameter.

In an embodiment of the present disclosure, in the case where the terminal determines that the third parameter is not configured, the terminal may determine that the HARQ process is not shared between the first type of CG configuration and the second type of CG configuration, where the CG period indicated by the second type of CG configuration includes one TO.

In an embodiment of the present disclosure, in the case where the terminal determines that the third parameter is not configured, the terminal may determine that the HARQ process is not shared between the TO indicated by the first type of CG configuration and the TO indicated by the second type of CG configuration.

In an embodiment of the present disclosure, in the case where the terminal determines that the third parameter is not configured, the terminal may determine that the HARQ process is not shared between the first type of CG configuration and the second type of CG configuration in the same BWP.

In an embodiment of the present disclosure, in the case where the terminal determines that the third parameter is not configured, the terminal may determine that the HARQ process cannot be shared between different first types of CG configurations.

In an embodiment of the present disclosure, in the case where the terminal determines that the third parameter is not configured, the terminal may determine that HARQ process is not shared between different first types of CG configurations in the same BWP.

In some embodiments, determining, by the terminal, that the third parameter is not configured includes at least one of: determining that the third parameter is not included in the first type of CG configuration, and determining that the third parameter is not configured; determining that the third parameter is not included in the second type of CG configuration, and determining that the third parameter is not configured; or determining that the third parameter is not configured by the network device, and determining that the third parameter is not configured.

In an embodiment of the present disclosure, determining, by the terminal, that the third parameter is not configured may be determining that the third parameter is not configured in the case where the third parameter is not included in the first type of CG configuration.

In an embodiment of the present disclosure, determining, by the terminal, that the third parameter is not configured may be determining that the third parameter is not configured in the case where the third parameter is not included in the second type of CG configuration.

In an embodiment of the present disclosure, determining, by the terminal, that the third parameter is not configured may be determining that the third parameter is not configured in the case where the third parameter is not configured by the network device.

It should be noted that the above embodiments are not exhaustive, and are only illustrations of some embodiments. The above embodiments may be implemented individually or in combination. The above embodiments are only for illustration, but are not intended to be specific limitations on the protection scope of the embodiments of the present disclosure.

In some embodiments, the names of information or the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, the terms such as "downlink control information (DCI)," "downlink (DL) assignment," "DL DCI," "uplink (UL) grant," and "UL DCI" may be used interchangeably.

In some embodiments, the terms such as "physical downlink shared channel (PDSCH)" and "DL data" may be used interchangeably, and the terms such as "physical uplink shared channel (PUSCH)" and "UL data" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, processing and obtaining on its/their own, autonomously implementing, or other meanings.

In some embodiments, terms such as "sending," "emitting," "reporting," "provisioning," "transmitting," "bidirectional transmission," and "sending and/or receiving" may be used interchangeably.

In some embodiments, the terms such as "certain," "preset," "predetermined," "set," "indicated," "particular," "any," and "first" may be used interchangeably, and "a certain A," "a preset A," "a predetermined A," "a set A," "an indicated A," "a particular A," "any A," or "a first A" may be interpreted as A predefined in a protocol or the like, or as A obtained by setting, configuration, or indication, or as a specific A, a particular A, any A, a first A, or the like, but is not limited thereto.

The communication methods involved in the embodiments of the present disclosure may include at least one of steps S21 or S22. For example, step S21 may be implemented as a standalone embodiment, step S22 may be implemented as a standalone embodiment, and steps S21+S22 may be implemented as a standalone embodiment, and the communication methods are not limited thereto.

In some embodiments, steps S21 and S22 may be executed in an interchangeable order or simultaneously.

In some embodiments, step S21 is optional, and one or more of these steps may be omitted or substituted in different embodiments.

In some embodiments, step S22 is optional, and one or more of these steps may be omitted or substituted in different embodiments.

In some embodiments, reference may be made to other optional implementations described before or after the specification corresponding to FIG. 2.

FIG. 3A is a flowchart illustrating a method for configuring an HARQ process according to an embodiment of the present disclosure. As shown in FIG. 3A, embodiments of the present disclosure relate to a method for configuring an HARQ process, which is performed by a terminal and includes the following step.

At step S311, it is determined that a first type of CG configuration that meets a first condition is activated, and a HARQ process identifier associated with a first TO indicated by the first type of CG configuration meets a second condition, where a CG period indicated by the first type of CG configuration includes multiple TOs; and it is determined that the first TO is configured to execute the HARQ process.

In some embodiments, the first condition includes: no specific parameter being configured in the first type of CG configuration, or a specific parameter being configured in the first type of CG configuration.

In some embodiments, the specific parameter includes at least one of: a HARQ process identifier offset (harq-ProcID-Offset), a second HARQ process identifier offset (harq-ProcID-Offset2), or a HARQ parameter.

In some embodiments, the terminal may determine the HARQ parameter based on a protocol predefinition, or the terminal may determine the HARQ parameter based on an instruction from a network device, or the terminal may determine the HARQ parameter based on an implementation, which is not specifically limited in the embodiments of the present disclosure.

In some embodiments, the HARQ parameter may be *X* (the numeric count of TOs within a CG period) introduced into the calculation of the HARQ process ID in order to assign corresponding HARQ process IDs to multiple TOs within the CG period.

In an embodiment of the present disclosure, the terminal may determine that the first type of CG configuration that meets the first condition is activated, and that the HARQ process identifier associated with the first TO indicated by the first type of CG configuration meets a second condition.

In some embodiments, the second condition includes: the HARQ process identifier associated with the first TO being less than a first value, or the HARQ process identifier associated with the first TO being greater than or equal to a second value and less than a third value.

In some embodiments, determining, by the terminal, that the first type of CG configuration that meets the first condition is activated, and the HARQ process identifier associated with the first TO indicated by the first type of CG configuration meets the second condition includes: determining that no specific parameter is configured in the first type of CG configuration, and the HARQ process identifier associated with the first TO indicated by the first type of CG configuration is less than a first value; or determining that no specific parameter is configured in the first type of CG configuration, and the HARQ process identifier associated with the first TO indicated by the first type of CG configuration is greater than or equal to a second value and less than a third value; or determining that a specific parameter is configured in the first type of CG configuration, and the HARQ process identifier associated with the first TO indicated by the first type of CG configuration is greater than or equal to a second value and less than a third value.

In some embodiments, the first value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In some embodiments, the second value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In some embodiments, the third value includes at least one of: a HARQ parameter; harq-ProcID-Offset; harq-ProcID-Offset2; nrofHARQ-Processes; a sum of a HARQ parameter and harq-ProcID-Offset; a sum of a HARQ parameter and harq-ProcID-Offset2; a sum of a HARQ parameter and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of a HARQ parameter, harq-ProcID-Offset and harq-ProcID-Offset2; a sum of harq-ProcID-Offset, harq-ProcID-Offset2, and nrofHARQ-Processes; a sum of a HARQ parameter, harq-ProcID-Offset and nrofHARQ-Processes; a sum of a HARQ parameter, harq-ProcID-Offset2 and nrofHARQ-Processes; or a sum of a HARQ parameter, harq-ProcID-Offset, harq-ProcID-Offset2, and nrofHARQ-Processes.

In some embodiments, the HARQ parameter is at least one of: the numeric count of PUSCHs configured within a CG period, the numeric count of PUSCHs configured within a specific period, the numeric count of TOs configured within a CG period, the numeric count of TOs configured within a specific period, the numeric count of PUSCHs configured within a CG period minus 1, the numeric count of PUSCHs configured within a specific period minus 1, the numeric count of TOs configured within a CG period minus 1, the numeric count of TOs configured within a specific period minus 1, the numeric count of valid PUSCHs configured within a CG period, the numeric count of valid PUSCHs configured within a specific period, the numeric count of valid TOs configured within a CG period, the numeric count of valid TOs configured within a specific period, the numeric count of valid PUSCHs configured within a CG period minus 1, the numeric count of valid PUSCHs configured within a specific period minus 1, the numeric count of valid TOs configured within a CG period minus 1, or the numeric count of valid TOs configured within a specific period minus 1.

In some embodiments, the terminal receives indication information sent by the network device, where the indication information indicates the HARQ parameter; and determines the HARQ parameter based on the indication information.

In some embodiments, receiving, by the terminal, the indication information sent by the network device includes: receiving an RRC signaling sent by the network device, where the RRC signaling includes the indication information.

In some embodiments, the specific period is a period range indicated by specific uplink control information reported by the terminal, and the specific uplink control information indicates whether a TO within the period range is used.

In some embodiments, the specific uplink control information may be UTO-UCI.

In some embodiments, time-frequency resources corresponding to the valid PUSCHs do not conflict with downlink resources, or time-frequency resources corresponding to the valid TOs do not conflict with downlink resources.

In some embodiments, the downlink resources are at least one of: a first downlink resource indicated by tdd-UL-DL-ConfigurationCommon, a second downlink resource indicated by tdd-UL-DL-ConfigurationDedicated, or a third downlink resource occupied by an SSB.

In an embodiment of the present disclosure, in one implementation, if the first type of CG configuration (multi-PUSCHs CG configuration) not configured with harq-ProcID-Offset or harq-ProcID-Offset2 is activated, and the HARQ process ID associated with the first TO indicated by the first type of CG configuration is less than the sum of the HARQ parameter (HARQ_X) and nrofHARQ-Processes, then the terminal may determine that the HARQ process is configured for the first TO indicated by the first type of CG configuration.

In an embodiment of the present disclosure, in one implementation, if the first type of CG configuration (multi-PUSCHs CG configuration) not configured with harq-ProcID-Offset or harq-ProcID-Offset2 is activated, and the HARQ process ID associated with the first TO indicated by the first type of CG configuration is not less than the HARQ parameter (HARQ_X) and is less than the sum of the HARQ parameter (HARQ_X) and nrofHARQ-Processes, then the terminal may determine that the HARQ process is configured for the first TO indicated by the first type of CG configuration.

In an embodiment of the present disclosure, in one implementation, if the first type of CG configuration (multi-PUSCHs CG configuration) not configured with harq-ProcID-Offset2 is activated, and the HARQ process ID associated with the first TO indicated by the first type of CG configuration is not less than harq-ProcID-Offset2 and is less than the sum of the HARQ parameter (HARQ_X), harq-ProcID-Offset2 and nrofHARQ-Processes, then the terminal may determine that the HARQ process is configured for the first TO indicated by the first type of CG configuration.

In an embodiment of the present disclosure, in one implementation, if the first type of CG configuration (multi-PUSCHs CG configuration) not configured with harq-ProcID-Offset2 is activated, and the HARQ process ID associated with the first TO indicated by the first type of CG configuration is not less than the sum of the HARQ parameter (HARQ_X) and harq-ProcID-Offset2, and is less than the sum of the HARQ parameter (HARQ_X), harq-ProcID-Offset2, and nrofHARQ-Processes, then the terminal may determine that the HARQ process is configured for the first TO indicated by the first type of CG configuration.

In some embodiments, the terminal may also determine the HARQ process identifier associated with the first TO indicated by the first type of CG configuration.

In some embodiments, the terminal may also determine the HARQ process identifier associated with the first TO indicated by the first type of CG configuration according to a specific calculation formula.

Regarding the description of determining, by the terminal, the HARQ process identifier associated with the first TO indicated by the first type of CG configuration, reference may be made to the description of step S21 in FIG. 2, which will not be repeated here.

It should be noted that regarding the optional implementation of step S311, reference may be made to the optional implementation of step S22 in FIG. 2 and other related parts in the embodiments involved in FIG. 2, which will not be repeated here.

By implementing the embodiments of the present disclosure, the terminal may determine whether the first TO among the multiple TOs indicated by the first type of CG configuration is configured to execute the HARQ process, so as to ensure normal communication.

FIG. 3B is a flowchart illustrating a method for configuring an HARQ process according to an embodiment of the present disclosure. As shown in FIG. 3B, embodiments of the present disclosure relate to a method for configuring an HARQ process, which is performed by a terminal and includes the following step.

At step S321, a HARQ process identifier associated with a first TO indicated by a first type of CG configuration is determined according to a specific calculation formula.

In some embodiments, a CG period indicated by the first type of CG configuration includes multiple TOs.

In some embodiments, the first TO may be any one of the multiple TOs indicated by the first type of CG configuration.

In an embodiment of the present disclosure, the terminal may determine the HARQ process identifier associated with the first TO indicated by the first type of CG configuration according to a specific calculation formula.

In some embodiments, the specific calculation formula includes at least one of: a first parameter, or a second parameter.

In some embodiments, the first parameter is at least one of: a symbol index of the first TO among multiple TOs indicated by the first type of CG configuration, or a symbol index of the first TO among multiple TOs indicated by the first type of CG configuration and a second type of CG configuration.

In some embodiments, the second type of CG configuration differs from the first type of CG configuration.

In some embodiments, the second type of CG configuration may be a CG configuration in the related art, for example, the CG period indicated by the second type of CG configuration includes only one TO.

In some embodiments, the first TO among the multiple TOs indicated by the first type of CG configuration includes: the first TO among multiple TOs in one CG period indicated by the first type of CG configuration, or the first TO among multiple TOs in multiple CG periods indicated by the first type of CG configuration.

In some embodiments, the first TO among the multiple TOs indicated by the first type of CG configuration and the second type of CG configuration includes: the first TO among multiple TOs in one CG period indicated by the first type of CG configuration and multiple CG periods indicated by the second type of CG configuration, or the first TO among multiple TOs in multiple CG periods indicated by the first type of CG configuration and multiple CG periods indicated by the second type of CG configuration.

In some embodiments, the second parameter is the numeric count of HARQ process identifiers associated with TOs indicated by the first type of CG configuration.

In some embodiments, the numeric count of HARQ process identifiers associated with the TOs indicated by the first type of CG configuration includes at least one of: the numeric count of HARQ process identifiers associated with TOs in one CG period indicated by the first type of CG configuration, or the numeric count of HARQ process identifiers associated with TOs in multiple CG periods indicated by the first type of CG configuration.

In some embodiments, after the terminal determines the HARQ process identifier associated with the first TO indicated by the first type of CG configuration, the terminal may determine that the first TO is configured to execute the HARQ process in the case where the terminal determines that the first type of CG configuration that meets a first condition is activated, and the HARQ process identifier associated with the first TO indicated by the first type of CG configuration meets a second condition, where a CG period indicated by the first type of CG configuration includes multiple TOs.

Specifically, regarding the relevant description of determining, by the terminal, that the first TO is configured to execute the HARQ process in the case where the terminal determines that the first type of CG configuration that meets the first condition is activated, and the HARQ process identifier associated with the first TO indicated by the first type of CG configuration meets the second condition, reference may be made to the relevant description in step S22 of FIG. 2, which will not be repeated here.

It should be noted that regarding the optional implementation of step S321, reference may be made to the optional implementation of step S21 in FIG. 2 and other related parts in the embodiments involved in FIG. 2, which will not be repeated here.

By implementing the embodiments of the present disclosure, the terminal may determine the HARQ process identifier associated with the first TO indicated by the first type of CG configuration, so as to further determine whether the first TO is configured to execute the HARQ process based on the HARQ process identifier associated with the first TO, so as to ensure normal communication.

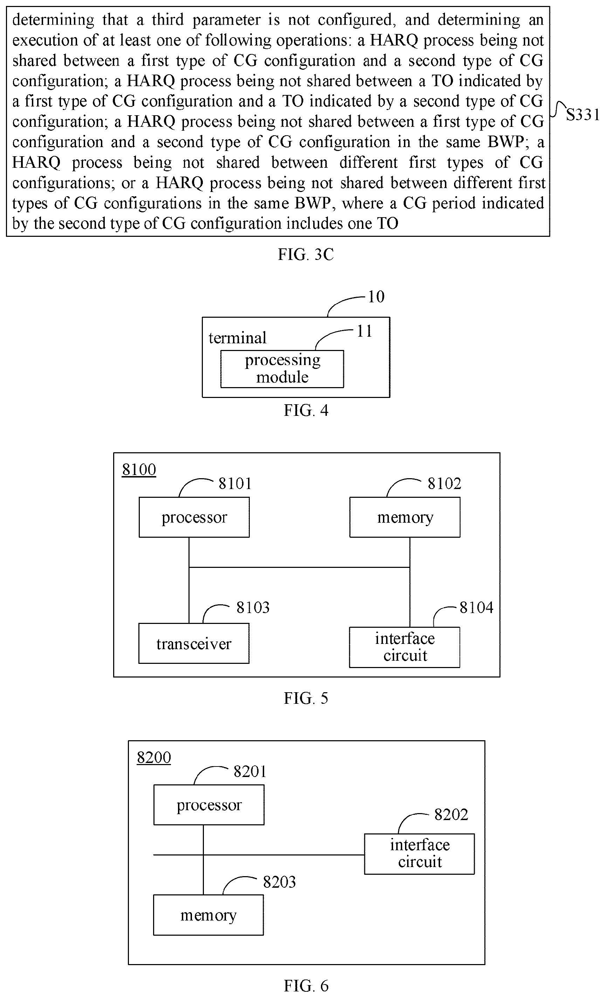

FIG. 3C is a flowchart illustrating a method for configuring an HARQ process according to an embodiment of the present disclosure. As shown in FIG. 3C, embodiments of the present disclosure relate to a method for configuring an HARQ process, which is performed by a terminal and includes the following step.

At step S331, it is determined that a third parameter is not configured, and an execution of at least one of the following operations is determined: a HARQ process being not shared between a first type of CG configuration and a second type of CG configuration; a HARQ process being not shared between a TO indicated by a first type of CG configuration and a TO indicated by a second type of CG configuration; a HARQ process being not shared between a first type of CG configuration and a second type of CG configuration in the same BWP; a HARQ process being not shared between different first types of CG configurations; or a HARQ process being not shared between different first types of CG configurations in the same BWP, where a CG period indicated by the second type of CG configuration includes one TO.

In some embodiments, the terminal may determine whether to configure the third parameter.

In some embodiments, the third parameter may be a CG retransmission timer (cg-Retransmission Timer).

Certainly, the third parameter may be other parameters, which is not specifically limited in the embodiments of the present disclosure.

In one possible implementation, the terminal may determine whether the third parameter is configured by determining whether the first type of CG configuration includes the third parameter.

In one possible implementation, the terminal may determine whether the third parameter is configured by determining whether the second type of CG configuration includes the third parameter.

In one possible implementation, the terminal may determine whether the third parameter is configured by determining whether the network device is configured with the third parameter.

In an embodiment of the present disclosure, in the case where the terminal determines that the third parameter is not configured, the terminal may determine that the HARQ process is not shared between the first type of CG configuration and the second type of CG configuration, where the CG period indicated by the second type of CG configuration includes one TO.

In an embodiment of the present disclosure, in the case where the terminal determines that the third parameter is not configured, the terminal may determine that the HARQ process is not shared between the TO indicated by the first type of CG configuration and the TO indicated by the second type of CG configuration.

In an embodiment of the present disclosure, in the case where the terminal determines that the third parameter is not configured, the terminal may determine that the HARQ process is not shared between the first type of CG configuration and the second type of CG configuration in the same BWP.

In an embodiment of the present disclosure, in the case where the terminal determines that the third parameter is not configured, the terminal may determine that the HARQ process cannot be shared between different first types of CG configurations.

In an embodiment of the present disclosure, in the case where the terminal determines that the third parameter is not configured, the terminal may determine that HARQ process is not shared between different first types of CG configurations in the same BWP.

In some embodiments, determining, by the terminal, that the third parameter is not configured includes at least one of: determining that the third parameter is not included in the first type of CG configuration, and determining that the third parameter is not configured; determining that the third parameter is not included in the second type of CG configuration, and determining that the third parameter is not configured; or determining that the third parameter is not configured by the network device, and determining that the third parameter is not configured.

In an embodiment of the present disclosure, determining, by the terminal, that the third parameter is not configured may be determining that the third parameter is not configured in the case where the third parameter is not included in the first type of CG configuration.

In an embodiment of the present disclosure, determining, by the terminal, that the third parameter is not configured may be determining that the third parameter is not configured in the case where the third parameter is not included in the second type of CG configuration.

In an embodiment of the present disclosure, determining, by the terminal, that the third parameter is not configured may be determining that the third parameter is not configured in the case where the third parameter is not configured by the network device.

It should be noted that regarding the optional implementation of step S331, reference may be made to the optional implementation of step S22 in FIG. 2 and other related parts in the embodiments involved in FIG. 2, which will not be repeated here.

By implementing the embodiments of the present disclosure, the terminal may determine the sharing of the HARQ process based on the conditions for sharing the HARQ process, so as to ensure normal communication.

To facilitate the understanding of the embodiments of the present disclosure, an illustrative embodiment is provided.

In the illustrative embodiment, the first type of CG configuration is a multi-PUSCHs CG configuration, the network device is a base station, the HARQ parameter is HARQ_X, and the specific period is an unused transmission occasion (UTO) period, as an example for illustration.

In one implementation, the base station configures at least one set of CG resources for the terminal in a BWP via an RRC signaling. A set of CG resources may also be called a CG period or a CG configuration. Within the CG period configured by the base station, the terminal may automatically perform an uplink transmission on all TOs in the CG configuration. In another implementation, the base station configures at least one portion of information of the CG configuration for the terminal in a BWP via an RRC signaling, and the base station notifies the terminal of the remaining information of the CG configuration via a dynamic signaling (DCI). After the base station activates the CG configuration via the dynamic signaling (DCI), the terminal may automatically perform an uplink transmission on a TO in the CG configuration within a CG period configured by the base station.

Based on the above, the HARQ process ID corresponding to a TO (or PUSCH) in the multi-PUSCHs CG configuration is determined by a specific calculation formula (HARQ process ID calculation formula). The method for determining whether a HARQ process is configured includes at least one of the following methods.

### Method 1:

If the multi-PUSCHs CG configuration not configured with the first parameter is activated, the terminal may determine that the HARQ process is configured for a first TO indicated by the multi-PUSCHs CG configuration in the case where the HARQ process ID associated with the first TO indicated by the multi-PUSCHs CG configuration is less than a first value.

### Method 2:

If the multi-PUSCHs CG configuration not configured with the first parameter is activated, the terminal may determine that the HARQ process is configured for a first TO indicated by the multi-PUSCHs CG configuration in the case where the HARQ process ID associated with the first TO indicated by the multi-PUSCHs CG configuration is not less than a second value and is less than a third value.

### Method 3:

If the multi-PUSCHs CG configuration configured with the first parameter is activated, the terminal may determine that the HARQ process is configured for a first TO indicated by the multi-PUSCHs CG configuration in the case where the HARQ process ID associated with the first TO indicated by the multi-PUSCHs CG configuration is not less than a second value and is less than a third value.

In some embodiments, the first parameter includes at least one of: harq-ProcID-Offset, harq-ProcID-Offset2, or HARQ_X.

In some embodiments, at least one of the first value, the second value, and the third value includes at least one of: HARQ_X; harq-ProcID-Offset; harq-ProcID-Offset2; nrofHARQ-Processes; a sum of HARQ_X and harq-ProcID-Offset; a sum of HARQ_X and harq-ProcID-Offset2; a sum of HARQ_X and nrofHARQ-Processes; a sum of harq-ProcID-Offset and harq-ProcID-Offset2; a sum of harq-ProcID-Offset and nrofHARQ-Processes; a sum of harq-ProcID-Offset2 and nrofHARQ-Processes; a sum of HARQ_X, harq-ProcID-Offset and harq-ProcID-Offset2; a sum of harq-ProcID-Offset, harq-ProcID-Offset2, and nrofHARQ-Processes; a sum of HARQ_X, harq-ProcID-Offset and nrofHARQ-Processes; a sum of HARQ_X, harq-ProcID-Offset2 and nrofHARQ-Processes; or a sum of HARQ_X, harq-ProcID-Offset, harq-ProcID-Offset2, and nrofHARQ-Processes.

In some embodiments, HARQ_X is configured by the base station for the terminal via an RRC signaling, or is predefined by a protocol, and the definition of HARQ_X includes at least one of: the numeric count of PUSCHs configured within a CG period, the numeric count of PUSCHs configured within a UTO period, the numeric count of TOs configured within a CG period, the numeric count of TOs configured within a UTO period, the numeric count of PUSCHs configured within a CG period minus 1, the numeric count of PUSCHs configured within a UTO period minus 1, the numeric count of TOs configured within a CG period minus 1, the numeric count of TOs configured within a UTO period minus 1, the numeric count of valid PUSCHs configured within a CG period, the numeric count of valid PUSCHs configured within a UTO period, the numeric count of valid TOs configured within a CG period, the numeric count of valid TOs configured within a UTO period, the numeric count of valid PUSCHs configured within a CG period minus 1, the numeric count of valid PUSCHs configured within a UTO period minus 1, the numeric count of valid TOs configured within a CG period minus 1, or the numeric count of valid TOs configured within a UTO period minus 1.

In some embodiments, in one implementation, if the multi-PUSCHs CG configuration not configured with harq-ProcID-Offset or harq-ProcID-Offset2 is activated, then the terminal may determine that the HARQ process is configured for the first TO indicated by the multi-PUSCHs CG configuration in the case where the HARQ process ID associated with the first TO indicated by the multi-PUSCHs CG configuration is less than the sum of HARQ_X and nrofHARQ-Processes.

In some embodiments, in one implementation, if the multi-PUSCHs CG configuration not configured with harq-ProcID-Offset or harq-ProcID-Offset2 is activated, then the terminal may determine that the HARQ process is configured for the first TO indicated by the multi-PUSCHs CG configuration in the case where the HARQ process ID associated with the first TO indicated by the multi-PUSCHs CG configuration is not less than HARQ_X and is less than the sum of HARQ_X and nrofHARQ-Processes.

In some embodiments, in one implementation, if the multi-PUSCHs CG configuration not configured with harq-ProcID-Offset2 is activated, then the terminal may determine that the HARQ process is configured for the first TO indicated by the multi-PUSCHs CG configuration in the case where the HARQ process ID associated with the first TO indicated by the multi-PUSCHs CG configuration is not less than harq-ProcID-Offset2 and is less than the sum of HARQ_X, harq-ProcID-Offset2 and nrofHARQ-Processes.

In some embodiments, in one implementation, if the multi-PUSCHs CG configuration is activated, then the terminal may determine that the HARQ process is configured for the first TO indicated by the multi-PUSCHs CG configuration in the case where the HARQ process ID associated with the first TO indicated by the multi-PUSCHs CG configuration is not less than the sum of HARQ_X and harq-ProcID-Offset2, and is less than the sum of HARQ_X, harq-ProcID-Offset2, and nrofHARQ-Processes.

In some embodiments, the HARQ process ID corresponding to a TO (or PUSCH) in the multi-PUSCHs CG configuration is determined by a specific calculation formula (HARQ process ID calculation formula), and the specific calculation formula includes at least one of a first parameter (CURRENT_symbol_r18) or a second parameter (nrofHARQ-Processes_r18).

The definition of CURRENT_symbol_r18 includes one of: a symbol index of the first TO among multiple TOs in a set of CG periods indicated by the multi-PUSCHs CG configuration, a symbol index of the first TO among multiple TOs in one CG period indicated by the multi-PUSCHs CG configuration, a symbol index of the first TO among multiple TOs in a set of CG periods indicated by a non-multi-PUSCHs CG configuration (second type of CG configuration) and one CG period indicated by the multi-PUSCHs CG configuration, or a symbol index of the first TO among multiple TOs in a set of CG periods indicated by a non-multi-PUSCHs CG configuration (second type of CG configuration) and a set of CG periods indicated by the multi-PUSCHs CG configuration.

The definition of nrofHARQ-Processes_r18 includes one of: the numeric count of HARQ process identifiers associated with TOs in one CG period indicated by the multi-PUSCHs CG configuration, or the numeric count of HARQ process identifiers associated with TOs in multiple CG periods indicated by the multi-PUSCHs CG configuration.

In some embodiments, if cg-RetransmissionTimer_r18 is not configured, one HARQ process cannot be shared between the non-multi-PUSCHs CG and the multi-PUSCHs CG.

In some embodiments, if cg-RetransmissionTimer_r18 is not configured, one HARQ process cannot be shared between a TO indicated by the non-multi-PUSCHs CG configuration and a TO indicated by the multi-PUSCHs CG configuration.

In some embodiments, if cg-RetransmissionTimer_r18 is not configured, one HARQ process cannot be shared between the non-multi-PUSCHs CG configuration and the multi-PUSCHs CG configuration configured in the same BWP.

In some embodiments, if cg-RetransmissionTimer_r18 is not configured, one HARQ process cannot be shared between multi-PUSCHs CG configurations.

In some embodiments, if cg-RetransmissionTimer_r18 is not configured, the HARQ process cannot be shared between different multi-PUSCHs CG configurations configured in the same BWP.

It should be noted that regarding the relevant description of the above illustrative embodiments, reference may be made to the relevant description of the embodiments shown in FIGS. 2 to 3B above, which will not be repeated here.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 4 is a schematic block diagram of a terminal provided in an embodiment of the present disclosure. As shown in FIG. 4, the terminal 10 may include at least one of a transceiver module or a processing module 11.

In some embodiments, the above processing module 11 is configured to determine that a first type of CG configuration that meets a first condition is activated, and a HARQ process identifier associated with a first TO indicated by the first type of CG configuration meets a second condition, where a CG period indicated by the first type of CG configuration includes multiple TOs; and to determine that the first TO is configured to execute a HARQ process. Optionally, the above processing module is configured to execute at least one of the processing steps (e.g., steps S21 and S22, but not limited thereto) performed by the terminal 10 in any of the above methods, which will not be elaborated here.

In some embodiments, the processing module may be a single module, or may include multiple sub-modules. Optionally, the aforementioned sub-modules may each execute all or some of the steps to be executed by the processing module. Optionally, the processing module may be interchanged with the processor.

FIG. 5 is a schematic block diagram of a communication device 8100 provided in an embodiment of the present disclosure. The communication device 8100 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 8100 may be configured to implement the methods as described in the above-mentioned method embodiments. For details, reference may be made to the description in the above-mentioned method embodiments.

As shown in FIG. 5, the communication device 8100 includes one or more processors 8101. The processor 8101 may be a general-purpose processor, a special-purpose processor, or the like. The processor 8101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The communication device 8100 is configured to execute any one of the above methods.

In some embodiments, the communication device 8100 further includes one or more memories 8102 for storing instructions. Alternatively, all or some of the memories 8102 may be located outside the communication device 8100.

In some embodiments, the communication device 8100 further includes one or more transceivers 8103. When the communication device 8100 includes one or more transceivers 8103, the communication steps such as sending and/or receiving steps in the above methods are performed by the transceiver 8103, and the other steps (for example, but not limited to, steps S21 and S22) are performed by the processor 8101.

In some embodiments, the transceiver may include a receiver and/or a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 8100 may include one or more interface circuits 8104. Optionally, the interface circuits 8104 are connected to the memory 8102. The interface circuits 8104 may be configured to receive signals from the memory 8102 or other devices, and may be configured to send signals to the memory 8102 or other devices. For example, the interface circuits 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited to FIG. 5. The communication device 8100 may be a standalone device or part of a larger device. For example, the communication device 8100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 6 is a schematic block diagram of a chip 8200 provided in an embodiment of the present disclosure. For the case where the communication device 8100 may be a chip or a chip system, reference may be made to the block diagram of the chip 8200 shown in FIG. 6, but the present disclosure is not limited thereto.

The chip 8200 includes one or more processors 8201, and the chip 8200 is configured to execute any one of the above methods.

In some embodiments, the chip 8200 further includes one or more interface circuits 8202. Optionally, the interface circuits 8202 are connected to the memory 8203. The interface circuits 8202 may be configured to receive signals from the memory 8203 or other devices, and may be configured to send signals to the memory 8203 or other devices. For example, the interface circuits 8202 may read instructions stored in memory 8203 and send the instructions to the processor 8201.

In some embodiments, the communication steps such as sending and/or receiving steps in the above methods are performed by the interface circuits 8202, and the other steps (for example, but not limited to, steps S21 and S22) are performed by the processor 8201.

In some embodiments, terms such as interface circuit, interface, transceiver pin, and transceiver may be used interchangeably.

In some embodiments, the chip 8200 further includes one or more memories 8203 for storing instructions. Alternatively, all or some of the memories 8203 may be located outside the chip 8200.

The present disclosure further provides a storage medium, which has stored therein instructions that, when executed on the communication device 8100, cause the communication device 8100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 8100, causes the communication device 8100 to perform any one of the above methods. Optionally, the above-mentioned program product is a computer program product.

The present disclosure further provides a computer program that, when executed on a computer, causes the computer to perform any one of the above methods.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the above-mentioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A method for configuring a hybrid automatic repeat request (HARQ) process, comprising:
determining that a first type of configured grant (CG) configuration that meets a first condition is activated, and a HARQ process identifier associated with a first CG transmission occasion (TO) indicated by the first type of CG configuration meets a second condition, wherein a CG period indicated by the first type of CG configuration comprises multiple TOs; and
determining that the first TO is configured to execute the HARQ process.

2. The method according to claim 1, wherein determining that the first type of CG configuration that meets the first condition is activated, and the HARQ process identifier associated with the first TO indicated by the first type of CG configuration meets the second condition comprises:
determining that no specific parameter is configured in the first type of CG configuration, and the HARQ process identifier associated with the first TO indicated by the first type of CG configuration is less than a first value; or
determining that no specific parameter is configured in the first type of CG configuration, and the HARQ process identifier associated with the first TO indicated by the first type of CG configuration is greater than or equal to a second value and less than a third value; or
determining that a specific parameter is configured in the first type of CG configuration, and the HARQ process identifier associated with the first TO indicated by the first type of CG configuration is greater than or equal to a second value and less than a third value.

3. The method according to claim 2, wherein the specific parameter comprises at least one of:
an HARQ process identifier offset (harq-ProcID-Offset);
a second HARQ process identifier offset (harq-ProcID-Offset2); or
an HARQ parameter.

4. The method according to claim 2, wherein at least one of the first value, the second value, or the third value comprises at least one of:
an HARQ parameter;
harq-ProcID-Offset;
harq-ProcID-Offset2;
a numeric count of HARQ processes (nrofHARQ-Processes);
a sum of a HARQ parameter and harq-ProcID-Offset;
a sum of a HARQ parameter and harq-ProcID-Offset2;
a sum of a HARQ parameter and nrofHARQ-Processes;
a sum of harq-ProcID-Offset and harq-ProcID-Offset2;
a sum of harq-ProcID-Offset and nrofHARQ-Processes;
a sum of harq-ProcID-Offset2 and nrofHARQ-Processes;
a sum of a HARQ parameter, harq-ProcID-Offset and harq-ProcID-Offset2;
a sum of harq-ProcID-Offset, harq-ProcID-Offset2, and nrofHARQ-Processes;
a sum of a HARQ parameter, harq-ProcID-Offset and nrofHARQ-Processes;
a sum of a HARQ parameter, harq-ProcID-Offset2 and nrofHARQ-Processes; or
a sum of a HARQ parameter, harq-ProcID-Offset, harq-ProcID-Offset2, and nrofHARQ-Processes.

5. The method according to claim 3 or 4, wherein the HARQ parameter is at least one of:
a numeric count of physical uplink shared channels (PUSCHs) configured within a CG period;
a numeric count of PUSCHs configured within a specific period;
a numeric count of TOs configured within a CG period;
a numeric count of TOs configured within a specific period;
a numeric count of PUSCHs configured within a CG period minus 1;
a numeric count of PUSCHs configured within a specific period minus 1;
a numeric count of TOs configured within a CG period minus 1;
a numeric count of TOs configured within a specific period minus 1;
a numeric count of valid PUSCHs configured within a CG period;
a numeric count of valid PUSCHs configured within a specific period;
a numeric count of valid TOs configured within a CG period;
a numeric count of valid TOs configured within a specific period;
a numeric count of valid PUSCHs configured within a CG period minus 1;
a numeric count of valid PUSCHs configured within a specific period minus 1;
a numeric count of valid TOs configured within a CG period minus 1; or
a numeric count of valid TOs configured within a specific period minus 1.

6. The method according to any one of claims 3 to 5, further comprising:
receiving indication information sent by a network device, wherein the indication information indicates the HARQ parameter;
determining the HARQ parameter based on the indication information.

7. The method according to claim 6, wherein receiving the indication information sent by the network device comprises:
receiving a radio resource control (RRC) signaling sent by the network device, wherein the RRC signaling comprises the indication information.

8. The method according to claim 5, wherein the specific period is a period range indicated by specific uplink control information reported by a terminal, and the specific uplink control information indicates whether a TO within the period range is used.

9. The method according to claim 5, wherein time-frequency resources corresponding to the valid PUSCHs do not conflict with downlink resources, or time-frequency resources corresponding to the valid TOs do not conflict with downlink resources.

10. The method according to claim 9, wherein the downlink resources are at least one of:
a first downlink resource indicated by a time division duplexing (TDD) uplink downlink common configuration (tdd-UL-DL-ConfigurationCommon);
a second downlink resource indicated by a TDD uplink downlink dedicated configuration (tdd-UL-DL-ConfigurationDedicated); or
a third downlink resource occupied by a synchronization signal block (SSB).

11. The method according to any one of claims 1 to 10, further comprising:
determining the HARQ process identifier associated with the first TO indicated by the first type of CG configuration according to a specific calculation formula.

12. The method according to claim 11, wherein the specific calculation formula comprises a first parameter, and the first parameter is at least one of:
a symbol index of the first TO among multiple TOs indicated by the first type of CG configuration; or
a symbol index of the first TO among multiple TOs indicated by the first type of CG configuration and a second type of CG configuration, wherein the CG period indicated by the second type of CG configuration comprises one TO.

13. The method according to claim 12, wherein the first TO among the multiple TOs indicated by the first type of CG configuration comprises:
the first TO among multiple TOs in one CG period indicated by the first type of CG configuration; or
the first TO among multiple TOs in multiple CG periods indicated by the first type of CG configuration.

14. The method according to claim 12 or 13, wherein the first TO indicated by the first type of CG configuration and the second type of CG configuration comprises:
the first TO among multiple TOs in one CG period indicated by the first type of CG configuration and multiple CG periods indicated by the second type of CG configuration; or
the first TO among multiple TOs in multiple CG periods indicated by the first type of CG configuration and multiple CG periods indicated by the second type of CG configuration.

15. The method according to any one of claims 11 to 14, wherein the specific calculation formula comprises a second parameter, and the second parameter is:
a numeric count of HARQ process identifiers associated with TOs indicated by the first type of CG configuration.

16. The method of claim 15, wherein the numeric count of HARQ process identifiers associated with the TOs indicated by the first type of CG configuration comprises at least one of:
a numeric count of HARQ process identifiers associated with TOs in one CG period indicated by the first type of CG configuration; or
a numeric count of HARQ process identifiers associated with TOs in multiple CG periods indicated by the first type of CG configuration.

17. The method according to any one of claims 1 to 16, further comprising:
determining that a third parameter is not configured, and determining an execution of at least one of:
the HARQ process being not shared between the first type of CG configuration and a second type of CG configuration;
the HARQ process being not shared between a TO indicated by the first type of CG configuration and a TO indicated by a second type of CG configuration;
the HARQ process being not shared between the first type of CG configuration and a second type of CG configuration in the same bandwidth part (BWP);
the HARQ process being not shared between different first types of CG configurations;
the HARQ process being not shared between different first types of CG configurations in the same BWP,
wherein a CG period indicated by the second type of CG configuration comprises one TO.

18. The method according to claim 17, wherein determining that the third parameter is not configured comprises at least one of:
determining that the third parameter is not comprised in the first type of CG configuration, and determining that the third parameter is not configured;
determining that the third parameter is not comprised in the second type of CG configuration, and determining that the third parameter is not configured; or
determining that the third parameter is not configured by a network device, and determining that the third parameter is not configured.

19. A terminal, comprising:
a processing module configured to determine that a first type of configured grant (CG) configuration that meets a first condition is activated, and a hybrid automatic repeat request (HARQ) process identifier associated with a first CG transmission occasion (TO) indicated by the first type of CG configuration meets a second condition, wherein a CG period indicated by the first type of CG configuration comprises multiple TOs,
wherein the processing module is further configured to determine that the first TO is configured to execute a HARQ process.

20. A terminal, comprising:
one or more processors,
wherein the terminal is configured to perform the method for configuring the hybrid automatic repeat request (HARQ) process according to any one of claims 1 to 18.

21. A storage medium having stored therein instructions that, when executed on a communication device, cause the communication device to perform the method for configuring the hybrid automatic repeat request (HARQ) process according to any one of claims 1 to 18.
